# EUROPEAN PATENT SPECIFICATION

(11) **EP 3 501 797 B1**
(45) Date of publication and mention of the grant of the patent: **21.04.2021**
(21) Application number: 17210352.5
(22) Date of filing: 22.12.2017
(51) Int. Cl.: B29C 64/153, B29C 64/245, B22F 3/105, B33Y 30/00

(54) **METHOD FOR ADDITIVELY MANUFACTURING OF THREE-DIMENSIONAL OBJECTS**
VERFAHREN ZUR GENERATIVEN FERTIGUNG VON DREIDIMENSIONALEN OBJEKTEN
PROCÉDÉ DE FABRICATION ADDITIVE D'OBJETS TRIDIMENSIONNELS

(43) Date of publication of application: 26.06.2019
(73) Proprietor: CL Schutzrechtsverwaltungs GmbH, 96215 Lichtenfels (DE)
(72) Inventor: Braunroth, Domenik, 96465 Neustadt bei Coburg (DE)
(74) Representative: Hafner & Kohl PartmbB

(56) References cited:
- WO-A1-2013/160188
- WO-A2-2010/049696

## Description

The invention relates to a method for additively manufacturing of three-dimensional objects by means of successive layerwise selective irradiation and consolidation of layers of a build material which can be consolidated by means of an energy source, wherein a carrying unit is provided that is adapted to carry the object to be built.

The manufacturing of three-dimensional objects by successive layerwise selective irradiation and consolidation of layers of a build material is generally known from prior art. Typically, an energy source is used to selectively irradiate and consolidate layers of build material applied in a build plane, wherein the selective irradiation and consolidation of the layers of build material corresponds to the cross-section of the object to be built.

Further, it is known from prior art that the object is additively built on a carrying element that provides the surface on which the build material is successively layerwise applied. Due to the irradiation and consolidation of the layers of build material, the object is manufactured on the carrying element, in particular bonded, e.g. melted or sintered, to the carrying element. After the manufacturing process of the additively built object has been finished, typically, the object has to be removed from the carrying element which is usually done by sawing the object off the carrying element. The separation of the object from the carrying element thus, is cumbersome and requires time and normally further post-processing, as the surface of the object that was connected with the carrying element needs to be treated to meet defined object requirements, in particular surface parameters, such as a surface roughness Document WO-A-2010049696 discloses a method in accordance with the preamble of claim 1.

It is an object of the present invention to provide an improved method for manufacturing of three-dimensional objects, wherein less post-processing of an additively built object is required.

The object is inventively achieved by a method according to claim 1. Advantageous embodiments of the invention are subject to the dependent claims.

The method described herein is a method for additively manufacturing three-dimensional objects. The inventive method may be performed on a corresponding apparatus for additively manufacturing of three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive method relates to an additive manufacturing process of three-dimensional objects, wherein need for post-processing of the three-dimensional object is improved, in particular reduced, as the separation of each three-dimensional object from the carrying element on which the three-dimensional object is additively built, is simplified or can even be omitted. In particular, the three-dimensional object according to the present invention does not have to be separated, in particular sawn off the carrying element, which requires effort regarding the required post-processing of the cut surface.

The invention is based on the idea that at least one foil- or sheet-like carrying element is detachably connected with the carrying unit, wherein the carrying element provides a surface on which the object is additively built, wherein at least one part of the carrying element is part of at least one object to be built. Thus, according to the invention a foil-like or sheet-like carrying element is used on which the object is additively built. The carrying element provides a surface the object can be additively built on. The carrying element can be connected with the carrying unit, in particular can be detachably connected with the carrying unit.

Thus, in advance to an additive manufacturing process, the foil- or sheet-like carrying element ("carrying element") is connected with the carrying unit. Subsequently, the carrying unit carrying the carrying element can be used in an additive manufacturing process, wherein the object is additively built on the surface provided by the carrying element. After the additive manufacturing process is finished, the carrying element can be detached from the carrying unit, wherein the carrying element forms at least a part of the additively built object and therefore, the object does not have to be cumbersome separated, in particular does not have to be sawn off the carrying element, influencing the surface quality, in particular of the bottom surface of the object.

For example, it is possible to use a metal foil or a metal sheet as carrying element (advantageously the same material as the additively built object) that is detachably connected with the carrying unit. On the metal foil or the metal sheet the object is additively built, wherein after the additive manufacturing process is finished the object can be removed from carrying unit together with the sheet/foil. Of course, the parts of the foil or the sheet that are not required (that protrude the bottom surface of the object) can be removed from the object. As the used carrying element is foil- or sheet-like and comparatively thin, the carrying element can be removed from the object without influencing the object quality. In particular, it is normally not required to post-process the (bottom) surface of the object after the carrying element according to the invention has been removed from the object.

According to a first embodiment of the invention, at least one connection means of the carrying unit, in particular a connection surface, is used for, in particular detachably, connecting the carrying element to the carrying unit. As described before, the carrying element is (detachably) attached to or connected with the carrying unit in that the object can be additively built on the surface provided by the carrying element. The carrying unit and/or the carrying element comprise one or more connection means that can be used to connect the carrying element to the carrying unit. Thus, a mechanically stable carrying unit, such as a metal plate, providing the required mechanical stability in the additive manufacturing process can be used to which the carrying element can be detachably connected. As the carrying element, as described before, is comparatively thin, as it is built as a foil-like or sheet-like carrying element, the carrying unit is used to a defined degree to provide mechanical stability to the carrying element.

To further increase the mechanical stability of the carrying element, the carrying element may be supported via at least one support element, in particular supported relative to the carrying unit. Thus, the at least one support element may support the carrying element on the carrying unit, wherein the at least one support element is preferably arranged between the carrying element and the carrying unit. Thus, at least one section of the support element is in contact with the carrying element and another section of the support element is in contact with the carrying unit. The at least one support element may, for example, be built as column or pillar arranged on the carrying unit carrying the carrying element. Hence, the carrying element is supported via the at least one support element with the carrying element in a connected state in which the carrying element is connected to the carrying unit. Further, the at least one support element may also comprise a connection means, as described before.

According to another embodiment of the inventive method, a position of at least one support element, in particular for supporting the carrying element, is defined dependent on a position of the object on the carrying element. With the carrying element being comparatively thin, such as thin metal foil or a thin metal sheet, the object that is additively built on the carrying element will induce a force on the carrying element due to gravity likely to deform the carrying element. To prevent a deformation of the carrying element, the at least one support element is provided that supports the carrying element. As the additively built object will induce a defined part of the weight resting on the carrying element, the position of the at least one support element is adjusted dependent on the position on which the object is additively built. Further, the position of the at least one support element can be adjusted dependent on a stress analysis on the carrying element, for example taking into calculation that the non-consolidated build material surrounding the additively built object may also induce a force on the carrying element..

The at least one carrying element may limit at least one recess in the carrying unit and/or is at least partially received in a recess with the carrying element connected to the carrying unit. Thus, with the carrying element in a connected state, in which the carrying element is (detachably) connected to the carrying unit, the carrying element limits one or more recesses in the carrying unit. Thus, the carrying element may be considered as a wall enclosing the recess in the carrying element. The carrying unit may further be built providing means in that the carrying element can at least partially be received in the recess.

Thus, the carrying unit that is used may comprise a recess with at least one opening. The carrying element may therefore, be arranged on the carrying unit or connected to the carrying unit, wherein the carrying element limits the recess that is provided in the carrying unit. The opening connects an inner volume of the recess with another volume, for example the environment. The opening can, in particular, be connected or connectable to a suction unit, wherein a negative pressure and/or a positive pressure may be generated in the recess via the suction unit. Thus, the suction unit is adapted to suck gas out of the recess or convey gas into the recess to influence the pressure present in the recess. In particular, the suction unit may be adapted to generate a negative pressure and/or a positive pressure in the recess.

The carrying element that limits the recess may be detachably connected to the carrying unit via a negative pressure applied in the recess in the carrying unit. Thus, after the carrying element is arranged on or connected with the carrying unit, a negative pressure can be applied in the recess in the carrying unit to secure the connection or establish a connection between the carrying unit and the carrying element. After the additive manufacturing process is finished and the carrying element needs to be detached from the carrying unit, the negative pressure in the recess of the carrying unit can be normalized in that gas is conveyed or let into the recess via the opening.

Further, the carrying element may be detachably connected to the carrying element via at least one force-locking, in particular via a screw connection, and/or positive-locking, in particular a tongue and groove connection, and/or substance bonded, in particular an adhesive, connection. Thus, various ways to detachably connect the carrying element with the carrying unit are possible, wherein in particular a combination of two or more different connection means is feasible. For example, the carrying element may be detachably connected to the carrying unit via at least one adhesive bond, wherein a thermal conductive and/or temperature stable, in particular above 200°C, adhesive is used.

Thus, the carrying element may be adhered to the carrying unit, wherein the bond may be dissolved after the additive manufacturing process is finished to detach the carrying unit from the carrying element, or vice versa. Preferably, an adhesive with a debonding temperature above 200°C is used, in that the adhesive is stable against temperatures present in the additive manufacturing process. After the additive manufacturing process is finished, a temperature above the debonding temperature can be applied to dissolve the bond and to detach the carrying element from the carrying unit.

According to a preferred embodiment of the present invention, a dimension of the at least one carrying element is defined dependent on at least one geometrical parameter of the object to be built, preferably a geometrical parameter relating to a bottom surface of the object. Thus, the dimensions of the carrying element, for example the size of the carrying element, in particular the area of the surface provided for the object to be built on, can be chosen or adjusted dependent on at least one geometrical parameter of the object to be built.

For example, the dimension of the at least one carrying element can be defined or chosen dependent on the geometry, in particular the shape and/or the size, of the bottom surface of the object. Hence, the carrying element may fit the bottom surface of the object in that no excess material is used for the carrying element protruding the object surface contacting the carrying element. Thus, after the carrying element is detached from the carrying unit, the additively built object is finished and does not require any post-processing. The term "bottom surface" refers to the surface of the additively built object with which it is in contact with the carrying element. Typically, as objects are built bottom-up, "bottom surface" refers to the surface at the bottom of the object.

It is also possible to take into account that the object has to be manufactured on an object carrier, for example a sheet of metal, wherein the size or at least one dimension of the at least one carrying element may be defined or adjusted or chosen in that the carrying element already fits the desired size of the object carrier. For example, if the additively built object is to be manufactured on a rectangular metal sheet carrying the object, a carrying element fitting the dimensions of the rectangular metal sheet can be used, wherein the object is additively built on top of the rectangular metal sheet, which is used as carrying element. Thus, no excess material is used for the carrying element and no cumbersome and time-consuming post-processing is required to post-process the object, in particular the bottom surface of the object, after a separation from the carrying unit.

After the additive manufacturing process is being performed or is finished, respectively, the object may be removed, in particular cut out of, the carrying element. Thus, if a carrying element is used that does not perfectly or exactly fit the dimensions of the bottom surface of the object, at least one excess part of the carrying element may be removed. To remove the excess part of the carrying element from the additively built object, the excess part may be, for example, cut off or pulled off or teared off the object.

The carrying element that is used in the inventive method may be built as or may comprise at least one metal foil and/or at least one metal sheet, preferably a titanium sheet or an aluminum sheet. As described before, preferably, the same material for the carrying element is used as it is used as build material in the additive manufacturing process, at least the same material that is used to form the bottom surface of the additively built object. Thus, the same material may be used for the carrying element and for the build material in the additive manufacturing process to achieve a uniform connection between the carrying element and the bottom surface of the additively built object.

As described before, the carrying element that is used in the inventive manufacturing process may be a foil-like or a sheet-like carrying element, wherein the carrying element preferably extends in build direction 0,01 mm - 2 mm, preferably 0,05 mm - 0,15 mm. The carrying element may thus, have a thickness in the range of 0,01 mm - 2 mm, preferably 0,05 mm - 0,15 mm. Thus, (very) thin metal sheets or (very) thin foils may be used, wherein preferably the mechanical stability of the material of the carrying element is defined or chosen so that excess parts of the carrying element, in particular parts of the carrying element protruding from the bottom surface of the object, can be removed easily.

Exemplary embodiments of the invention are described with reference to the Fig. The Fig. are schematic diagrams, wherein
- Fig. 1: shows an apparatus for additively manufacturing of three-dimensional objects;
- Fig. 2: shows a carrying unit for the apparatus of Fig. 1 according to a first embodiment; and
- Fig. 3: shows a carrying unit for the apparatus of Fig. 1 according to a second embodiment.

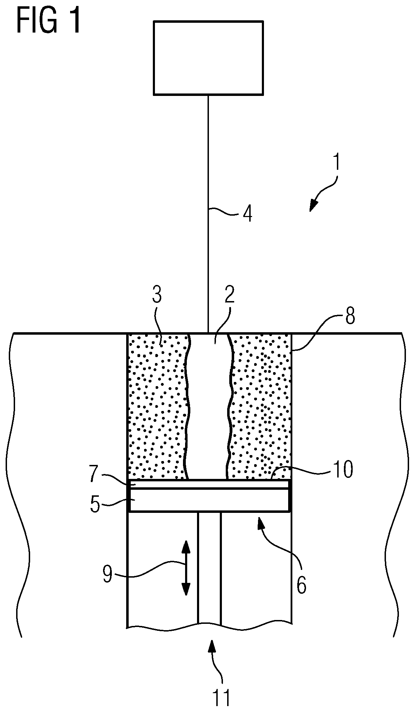

Fig. 1 shows an apparatus 1 for additively manufacturing of three-dimensional objects 2 by means of successive layerwise selective irradiation and consolidation of layers of a build material 3 which can be consolidated by means of an energy source, for example a laser beam 4. The apparatus 1 comprises a carrying unit 5 that is, for example received in a build chamber 6 of a build module 11. The carrying unit 5 is vertically movable relative to a wall 8 of the build chamber 6, as indicated by arrow 9. The carrying unit 5 is used to carry the object 2 and the non-consolidated build material 3 surrounding the object 2, the so-called powder bed. The carrying unit 5 may be a frame or support or may have a frame-like or support-like shape (applies to all embodiments).

As can further be derived from Fig. 1, the carrying unit 5 has a carrying element 7 detachably connected to the carrying unit 5. The carrying element 7 is built as foil -like or sheet-like carrying element 7 ("carrying element 7"), for example built as a metal foil or a metal sheet, in particular extending in build direction 0,01mm - 2mm, preferably 0,05mm - 0,15mm. The carrying element 7 may, for example be built as a thin aluminum foil or titanium foil, wherein the carrying element 7 preferably is of the same material as the build material 3 of the object 2 which is to be additively built. The object 2 is additively built on a surface 10 provided by the carrying element 7. The surface 10 may be the top surface of the carrying element 7. Thus, the first layer of build material 3 that is applied on the surface 10 of the carrying element 7 is consolidated and thereby connected to the surface 10 of the carrying element 7, e.g. sintered or melted.

After the additive manufacturing process is finished and the object 2 is additively built, the non-consolidated build material 3 surrounding the object 2 can be removed and the carrying element 7 can be detached from the carrying unit 5. To allow a detachment from the carrying unit 5, the carrying unit 5 and/or the carrying element 7 comprise corresponding connection means, for example the carrying element 7 may be detachably connected to the carrying unit 5 via at least one force-locking, in particular via a screw connection, and/or positive-locking, in particular a tongue and groove connection, and/or substance bonded, in particular an adhesive, connection.

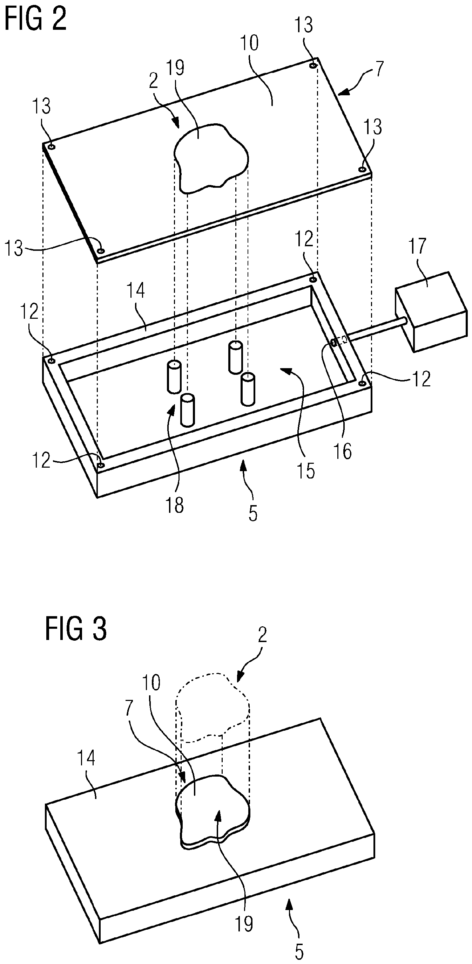

Fig. 2 shows a carrying unit 5 according to a first exemplary embodiment. The carrying unit 5 comprises four connection means 12 that are, for example, built as receiving portions for a corresponding screw to be screwed into the receiving portions. The carrying element 7, that is to be connected with the carrying unit 5 comprises corresponding connection means 13, for example through holes through which a corresponding screw can be put to be received in the connection means 12 of the carrying unit 5.

As can further be derived from Fig. 2, the carrying unit 5 comprises a connection surface 14 to which the carrying element 7 can be attached. With the carrying element 7 in the attached position, the carrying element 7 limits a recess 15 in the carrying unit 5. The carrying unit 5 further comprises an opening 16 connecting an inner volume of the recess 15 in the carrying unit 5 with a suction unit 17. Via the suction unit 17 a negative pressure and/or a positive pressure can be applied in the recess 15 with the carrying element 7 in the connected position limiting the recess 15. Thus, the connection of the carrying element 7 can be intensified with the suction unit 17 generating a negative pressure in the recess 15 applying a force on the carrying element 7 pressing the carrying element 7 against the connection surface 14. Also, to detach the carrying element 7, a positive pressure can be applied in the recess 15 generating a force on the carrying element 7 that is directed to detach the carrying element 7 from the connection surface 14.

Further, the carrying unit 5 comprises four support elements 18 for supporting the carrying element 7 with the carrying element 7 in the attached position. The support elements 18 are positioned below the portion of the carrying element 7 on which the object 2 is to be manufactured. Thus, for example with the carrying element 7 being a thin foil, the weight of the object 2 is supported via the support elements 18. Of course, the non-consolidated build material 3 that rests on the carrying element is 7 also puts weight on the carrying element 7. Thus, multiple support elements 18 can be distributed over the carrying unit 5 supporting the carrying element 7.

Additionally, the contact surface 14 or the top surface of the support elements 18 can be provided with an adhesive to adhere the carrying element 7 to the carrying unit 5. The adhesive is preferably temperature stable, in particular temperature stable above 200°C. After the additive manufacturing process has been finished, the adhesive can be heated to a temperature above a debonding temperature above which the bond is dissolved to detach the carrying element 7 from the carrying unit 5.

After the carrying element 7 has been detached from the carrying unit 5, an excess part of the carrying element 7 protruding the bottom surface 19 of the object 2 can be removed from the object 2, for example by tearing of or pulling off or cutting out the object 2.

Fig. 3 shows a carrying unit 5 according to a second embodiment. The carrying unit 5 comprises a contact surface 14 to which a carrying element 7 is detachably connected, for example adhered, in particular bonded via a corresponding adhesive, as described before. As can be derived from Fig. 3, the dimensions of the carrying element 7 are defined or chosen with respect to a geometrical parameter of the object 2, in particular the size and the geometry of a bottom surface 19 of the object 2 to be built. Therefore, the surface 10 of the carrying element 7 provided for the object 2 to be built on fits the bottom surface 19 of the object 2 to be manufactured on top of the surface 10 of the carrying element 7. In other words, the carrying element 7 is used as a bottom section of the object 2, wherein the object 2 is additively manufactured onto the carrying element 7. Thus, after the additive manufacturing process is finished and the object 2 has been manufactured on top of the carrying element 7, the carrying element 7 can be detached from the carrying unit 5, as described before. Thus, it is not necessary to post-process the bottom surface 19 of the object 2, as the carrying element 7 already forms the desired part of the object 2.

It is possible to have a carrying element 7 fitted to the dimensions of the object 2 and supported via support elements 18 and/or delimiting a recess 15, as depicted in Fig. 2. Self-evidently, the inventive method can be performed on the apparatus 1, preferably using the carrying unit 5 depicted in the Fig. 2, 3.

## Claims

1. Method for additively manufacturing of three-dimensional objects (2) by means of successive layerwise selective irradiation and consolidation of layers of a build material (3) which can be consolidated by means of an energy source, wherein a carrying unit (5) is provided that is adapted to carry the object (2) to be built, wherein at least one foil- or sheet-like carrying element (7) is detachably connected with the carrying unit (5), wherein the carrying element (7) provides a surface (10) on which the object (2) is additively built, wherein at least one part of the carrying element (7) is part of at least one object (2) to be built, **characterized in that** an area of the surface of the at least one carrying element (7) provided for the object (2) to be built on is chosen or adjusted dependent on the shape and/or size of the bottom surface of the object (2) to be built, wherein the object (2) is built on the carrying element (7).

2. Method according to one of the preceding claims, **characterized in that** at least one connection means (12, 13, 14) of the carrying unit (5), in particular a connection surface (14), is used for, in particular detachably, connecting the carrying element (7) to the carrying unit (5).

3. Method according to one of the preceding claims, **characterized in that** the at least one carrying element (7) is supported via at least one support element (18), in particular supported relative to the carrying unit (5).

4. Method according to one of the preceding claims, **characterized in that** a position of at least one support element (18), in particular for supporting the carrying element (7), is defined dependent on a position of the object (2) on the carrying element (7).

5. Method according to one of the preceding claims, **characterized in that** the at least one carrying element (7) limits at least one recess (15) in the carrying unit (5) and/or is at least partially received in the recess (15) with the carrying element (7) connected to the carrying unit (5).

6. Method according to one of the preceding claims, **characterized in that** a carrying unit (5) with a recess (15) comprising at least one opening (16) is used.

7. Method according to one of the preceding claims, **characterized in that** the opening (16) is connectable or connected to a suction unit (17), wherein a negative pressure and/or a positive pressure is generated in the recess (15) via the suction unit (17).

8. Method according to one of the preceding claims, **characterized in that** the carrying element (7) is detachably connected to the carrying element (7) via at least one force-locking, in particular via a screw connection, and/or positive-locking, in particular a tongue and groove connection, and/or substance bonded, in particular an adhesive, connection.

9. Method according to one of the preceding claims, **characterized in that** the carrying element (7) is detachably connected to the carrying unit (5) via at least one adhesive bond, wherein a thermal conductive and/or temperature stable, in particular above 200 °C, adhesive is used.

10. Method according to one of the preceding claims, **characterized in that** the object (2) is removed, in particular cut out of, the carrying element (7), after the additive manufacturing process is finished.

11. Method according to one of the preceding claims, **characterized in that** a carrying element (7) built as or comprising at least one metal foil and/or at least one metal sheet, preferably a titanium sheet or an aluminum sheet, is used.

12. Method according to one of the preceding claims, **characterized in that** a carrying element (7) extending in build direction 0,01mm - 2mm, preferably 0,05mm - 0,15mm, is used.

## Patentansprüche

1. Verfahren zur additiven Herstellung von dreidimensionalen Objekten (2) mittels sukzessiver schichtweiser selektiver Bestrahlung und Verfestigung von Schichten eines mittels einer Energiequelle verfestigbaren Aufbaumaterials (3), wobei eine Trägereinheit (5) vorgesehen ist, die zum Tragen des aufzubauenden Objekts (2) ausgebildet ist, wobei mindestens ein folien- oder plattenförmiges Trägerelement (7) lösbar mit der Trägereinheit (5) verbunden ist, wobei das Trägerelement (7) eine Oberfläche (10) bereitstellt, auf der das Objekt (2) additiv aufgebaut wird, wobei mindestens ein Teil des Trägerelements (7) Teil mindestens eines aufzubauenden Objekts (2) ist, **dadurch gekennzeichnet, dass** ein Bereich der Oberfläche des mindestens einen Trägerelements (7), der für das aufzubauende Objekt (2) vorgesehen ist, in Abhängigkeit von der Form und/oder Größe der Bodenfläche des aufzubauenden Objekts (2) gewählt oder eingestellt wird, worin das Objekt (2) auf dem Trägerelement (7) aufgebaut wird.

2. Verfahren nach einem der vorangegangenen Ansprüche, **dadurch gekennzeichnet, dass** mindestens ein Verbindungsmittel (12, 13, 14) der Trägereinheit (5), insbesondere eine Verbindungsfläche (14), zum, insbesondere lösbaren, Verbinden des Trägerelements (7) mit der Trägereinheit (5) verwendet wird.

3. Verfahren nach einem der vorangegangenen Ansprüche, **dadurch gekennzeichnet, dass** das mindestens eine Trägerelement (7) über mindestens ein Stützelement (18) abgestützt wird, insbesondere relativ zur Trägereinheit (5) abgestützt wird.

4. Verfahren nach einem der vorangegangenen Ansprüche, **dadurch gekennzeichnet, dass** eine Position mindestens eines Stützelements (18), insbesondere zum Abstützen des Trägerelements (7), in Abhängigkeit von einer Position des Objekts (2) auf dem Trägerelement (7) festgelegt wird.

5. Verfahren nach einem der vorangegangenen Ansprüche, **dadurch gekennzeichnet, dass** das mindestens eine Trägerelement (7) mindestens eine Aussparung (15) in der Trägereinheit (5) begrenzt und/oder zumindest teilweise in der Aussparung (15) aufgenommen ist, wobei das Trägerelement (7) mit der Trägereinheit (5) verbunden ist.

6. Verfahren nach einem der vorangegangenen Ansprüche, **dadurch gekennzeichnet, dass** eine Trägereinheit (5) mit einer Aussparung (15) verwendet wird, die mindestens eine Öffnung (16) umfasst.

7. Verfahren nach einem der vorangegangenen Ansprüche, **dadurch gekennzeichnet, dass** die Öffnung (16) mit einer Saugeinheit (17) verbindbar oder verbunden ist, worin über die Saugeinheit (17) ein Unterdruck und/oder ein Überdruck in der Aussparung (15) erzeugt wird.

8. Verfahren nach einem der vorangegangenen Ansprüche, **dadurch gekennzeichnet, dass** das Trägerelement (7) mit der Trägereinheit (5) über mindestens eine kraftschlüssige, insbesondere über eine Schraubverbindung, und/oder formschlüssige, insbesondere eine Nut- und Federverbindung, und/oder stoffschlüssige, insbesondere eine Klebeverbindung, lösbar verbunden wird.

9. Verfahren nach einem der vorangegangenen Ansprüche, **dadurch gekennzeichnet, dass** das Trägerelement (7) über mindestens eine Klebeverbindung lösbar mit der Trägereinheit (5) verbunden wird, worin ein wärmeleitfähiger und/oder temperaturstabiler,
insbesondere über 200 °C, Klebstoff verwendet wird.

10. Verfahren nach einem der vorangegangenen Ansprüche, **dadurch gekennzeichnet, dass** das Objekt (2) nach Beendigung des additiven Fertigungsprozesses aus dem Trägerelement (7) entfernt, insbesondere herausgeschnitten wird.

11. Verfahren nach einem der vorangegangenen Ansprüche, **dadurch gekennzeichnet, dass** ein Trägerelement (7) verwendet wird, das mindestens eine Metallfolie und/oder mindestens ein Metallblech, vorzugsweise ein Titanblech oder ein Aluminiumblech, ist oder dieses umfasst.

12. Verfahren nach einem der vorangegangenen Ansprüche, **dadurch gekennzeichnet, dass** ein sich in Baurichtung erstreckendes Trägerelement (7) von 0,01 mm - 2 mm, vorzugsweise
0,05 mm - 0,15 mm verwendet wird.

## Revendications

1. Procédé de fabrication additive d'objets tridimensionnels (2) par irradiation sélective successive couche par couche et consolidation de couches d'un matériau de construction (3) qui peut être consolidé au moyen d'une source d'énergie, une unité porteuse (5) étant fournie qui est adaptée pour porter l'objet (2) à construire, où au moins un élément porteur (7) en forme de feuille ou en forme de plaque est raccordé de façon détachable à l'unité porteuse (5), l'élément porteur (7) fournissant une surface (10) sur laquelle l'objet (2) est construit de façon additive, au moins une partie de l'élément porteur (7) faisant partie de l'au moins un objet (2) à construire, **caractérisé en ce qu'**une surface partie de la surface de l'au moins un élément porteur (7) fourni pour l'objet (2) à construie est choisie ou ajustée en fonction de la forme et/ou de la taille de la surface inférieure de l'objet (2) à construire, l'objet (2) étant construit sur l'élément porteur (7).

2. Procédé selon l'une des revendications précédentes, **caractérisé en ce qu'**au moins un moyen de raccordement (12, 13, 14) de l'unité porteuse (5), en particulier une surface de raccordement (14), sert, en particulier de façon détachable, à raccorder l'élément porteur (7) à l'unité porteuse (5).

3. Procédé selon l'une des revendications précédentes, **caractérisé en ce que** l'au moins un élément porteur (7) est supporté via au moins un élément support (18), en particulier supporté par rapporté à l'unité porteuse (5).

4. Procédé selon l'une des revendications précédentes, **caractérisé en ce qu'**une position de l'au moins un élément support (18), en particulier pour supporter l'élément porteur (7), est définie en fonction d'une position de l'objet (2) sur l'élément porteur (7).

5. Procédé selon l'une des revendications précédentes, **caractérisé en ce que** l'au moins un élément porteur (7) limite au moins un renfoncement (15) dans l'unité porteuse (5) et/ou est au moins partiellement reçu dans le renfoncement (15) avec l'élément porteur (7) raccordé à l'unité porteuse (5).

6. Procédé selon l'une des revendications précédentes, **caractérisé en ce qu'**une unité porteuse (5) avec un renfoncement (15) comprenant au moins une ouverture (16) est utilisée.

7. Procédé selon l'une des revendications précédentes, **caractérisé en ce que** l'ouverture (16) est raccordable ou raccordée à une unité d'aspiration (17), une pression négative et/ou une pression positive étant générée dans le renfoncement (15) via l'unité d'aspiration (17).

8. Procédé selon l'une des revendications précédentes, **caractérisé en ce que** l'élément porteur (7) est raccordé de façon détachable à l'unité porteuse (7) via au moins un verrouillage par force, en particulier via un raccordement par vis, et/ou au moins un verrouillage positif, en particulier un raccordement par rainure et languette, et/ou une liaison par substance, en particulier un raccordement par adhésif.

9. Procédé selon l'une des revendications précédentes, **caractérisé en ce que** l'élément porteur (7) est raccordé de façon détachable à l'unité porteuse (5) via au moins une liaison adhésive, où un adhésif conducteur de chaleur et/ou stable en température, en particulier au-dessus de 200 °C, est utilisé.

10. Procédé selon l'une des revendications précédentes, **caractérisé en ce que** l'objet (2) et enlevé, en particulier coupé de l'élément porteur (7), une fois que le procédé de fabrication additive est terminé.

11. Procédé selon l'une des revendications précédentes, **caractérisé en ce qu'**un élément porteur (7) construit comme ou comprenant au moins une feuille de métal et/ou au moins une plaque de métal, de préférence une plaque de titane ou une plaque d'aluminium, est utilisé.

12. Procédé selon l'une des revendications précédentes, **caractérisé en ce qu'**un élément porteur (7) s'étendant dans une direction de construction de 0,01 mm - 2 mm, de préférence
de 0,05 mm - 0,15 mm, est utilisé.
